# EUROPEAN PATENT APPLICATION

(11) **EP 4 303 698 A1**
(43) Date of publication of application: **10.01.2024**
(21) Application number: 23306142.3
(22) Date of filing: 06.07.2023
(51) Int. Cl.: G06F 3/01, G06F 3/03

(54) **GESTURE RECOGNITION METHOD FOR ELECTRONIC DEVICE, ELECTRONIC DEVICE AND STORAGE MEDIUM**

(30) Priority: 07.07.2022 CN 202210802493
(71) Applicant: Schneider Electric Industries SAS, 92500 Rueil-Malmaison (FR)
(72) Inventor: LI, Hailong, Shenzhen, 518000 (CN); LIU, Weiyong, Shenzhen, 518000 (CN); GUO, Dabang, Shenzhen, 518000 (CN)
(74) Representative: Manitz Finsterwald Patent- und Rechtsanwaltspartnerschaft mbB

(57) **Abstract**

Embodiments of the present disclosure relate to a gesture recognition method for an electronic device, an electronic device and a storage medium. The method includes: receiving a light reflection signal formed by reflecting, by a gesture of a user, a light signal emitted by the electronic device; determining a feature parameter of the light reflection signal, the feature parameter representing a speed of the gesture of the user; and identifying an operation corresponding to the gesture based on the feature parameter and a corresponding relationship between the feature parameter and a predetermined operation. The technical solution according to embodiments of the present disclosure can improve the gesture recognition reliability while avoiding or reducing misrecognition.

## Description

### FIELD

Embodiments of the present disclosure generally relate to the field of electronic devices, and more specifically, to a gesture recognition method for an electronic device, an electronic device, a computer readable storage medium and an electronic apparatus.

### BACKGROUND

Connectable smart products can be applied in an increasing wider range. For example, smart products conforming to the KNX (short for Konnex) protocol are used increasingly in the market. A KNX bus system is a system independent of manufacturers and application fields. The system may be used to control building management devices and the like, for example, lighting devices, shading devices/blinds, energy management, ventilation and air conditioning systems, signaling and monitoring systems, or the like.

It is known that some smart products exhibit poor performance in operation convenience and are probably triggered by mistake. Therefore, there arises a need for an improved solution to improve the smart products in operation convenience and reliability.

### SUMMARY

Embodiments of the present disclosure provide a gesture recognition method for an electronic device, an electronic device, a computer readable storage medium and an electronic apparatus, so as to solve at least one of the above-mentioned problem and other potential problems.

According to a first aspect of the present disclosure, there is provided a gesture recognition method for an electronic device. The method comprises: receiving a light reflection signal formed by reflecting, by a gesture of a user, a light signal emitted by the electronic device; determining a feature parameter of the light reflection signal, the feature parameter representing a speed of the gesture of the user; and identifying an operation corresponding to the gesture based on the feature parameter and a corresponding relationship between the feature parameter and a predetermined operation.

In those embodiments, by identifying a feature parameter representing a speed of the gesture to identify the operation corresponding to the gesture, the recognition reliability can be improved while misrecognition can be avoided or reduced.

In some embodiments, the light reflection signal is a pulse signal formed by reflecting, by the gesture of the user, the light signal in a pulsed or continuous form.

In those embodiments, by forming a pulsed feedback signal, convenience in recognition is provided while the recognition reliability can be improved.

In some embodiments, determining the feature parameter of the light reflection signal comprises: determining a pulse width of the pulse signal; determining a number of the pulse signals received within a predetermined time; and/or determining a time interval between the pulse signals received within a predetermined time.

In those embodiments, the speed of the gesture can be determined by determining the pulse width, the number of pulse signals, or the pulse time interval, so that the operation corresponding to the gesture can be easily identified.

In some embodiments, identifying the operation corresponding to the gesture based on the feature parameter and the corresponding relationship between the feature parameter and the predetermined operation comprises: responsive to the number of the pulse signals received within the predetermined time being less than a predetermined number threshold, determining that the gesture is used to execute a first type of operation for the electronic device; or responsive to the number of the pulse signals received within the predetermined time being greater than or equal to the predetermined number threshold, determining that the gesture is used to execute a second type of operation for the electronic device, and determining the operation corresponding to the gesture based on the number of the pulse signals and the corresponding relationship; wherein the first type of operation is different than the second type of operation.

In those embodiments, an operation type corresponding to the gesture can be first determined depending on the number of the pulses signals received with the predetermined time. On the basis of determining the operation type, a specific operation corresponding to the gesture can be further determined.

In some embodiments, identifying the operation corresponding to the gesture based on the feature parameter and the corresponding relationship between the feature parameter and the predetermined operation comprises: responsive to the pulse width of the pulse signal being greater than a pulse width threshold, determining that the gesture is used to execute a first type of operation for the electronic device; or responsive to the pulse width of the pulse signal being less than or equal to the pulse width threshold, determining that the gesture is used to execute a second type of operation for the electronic device, and determining the operation corresponding to the gesture based on the pulse width of the pulse signal and the corresponding relationship; wherein the first type of operation is different than the second type of operation.

In those embodiments, an operation type corresponding to the gesture can be first determined by determining the pulse width. On the basis of determining the operation type, a specific operation corresponding to the gesture can be further determined.

In some embodiments, identifying the operation corresponding to the gesture based on the feature parameter and the corresponding relationship between the feature parameter and the predetermined operation comprises: responsive to a time interval between at least one pair of the pulse signals adjacent in the pulse signals received within the predetermined time being greater than a predetermined time threshold, determining that the gesture is used to execute a first type of operation for the electronic device; or responsive to a time interval between the pulse signals adjacent in the pulse signals received within the predetermined time being less than or equal to the predetermined time threshold, determining that the gesture is used to execute a second type of operation for the electronic device, and determining the operation corresponding to the gesture based on an average time interval and the corresponding relationship; wherein the first type of operation is different than the second type of operation.

In those embodiments, by determining an interval among a plurality of pulses, an operation type corresponding to the gesture can be first determined. On the basis of determining the operation type, a specific operation corresponding to the gesture can be first determined.

In some embodiments, receiving the light reflection signal comprises: receiving a first light reflection signal, wherein the first light reflection signal is formed by reflecting, by the gesture of the user, a first light signal emitted by a first light emitter of the electronic device; and receiving a second light reflection signal, wherein the second light reflection signal is formed by reflecting, by the gesture of the user, a second light signal emitted by a second light emitter of the electronic device, and light emitting locations of the first light emitter and the second light emitter on an operation panel of the electronic device are spaced apart a predetermined distance.

In those embodiments, by arranging two light reflectors, two pulse signals can be detected during a gesture. Based further on the feature parameter of the pulse signal, the operation corresponding to the gesture can be identified accurately, to thus improve the recognition accuracy.

In some embodiments, identifying the operation corresponding to the gesture based on the feature parameter and the corresponding relationship between the feature parameter and the predetermined operation comprises: determining a time interval between a moment of receiving the first light reflection signal and a moment of receiving the second light reflection signal; determining an average speed of the gesture based on the predetermined distance and the time interval; and determining the operation corresponding to the gesture based on the average speed and the corresponding relationship.

In those embodiments, based on the light emitting locations of the two light emitters and the time slot between two pulse signals, the speed of the gesture can be determined accurately, to thus accurately identify the operation corresponding to the gesture and improve the recognition accuracy.

According to another aspect of embodiments of the present disclosure, there is provided an electronic device. The electronic device comprises: a light emitter configured to emit a light signal; a light receiver configured to receive a light reflection signal, the light reflection signal formed by reflecting, by a gesture of a user, the light signal; and a processor configured to determine a feature parameter of the light reflection signal, the feature parameter representing a speed of the gesture of the user, and to identify an operation corresponding to the gesture based on the feature parameter and a corresponding relationship between the feature parameter and a predetermined operation.

In those embodiments, the light emitters emit signals, and the light receiver receives the light signals and identifies the feature parameter represents the speed of the gesture to identify the operation corresponding to the gesture; in the case, the recognition accuracy can be improved while misrecognition can be avoided or reduced.

In some embodiments, the light emitter comprises: a first light emitter configured to emit a first light signal; and a second light emitter configured to emit a second light signal; wherein light emitting locations of the first light emitter and the second light emitter on an operation panel of the electronic device are spaced apart a predetermined distance.

In some embodiments, the first light emitter and the second light emitter are infrared emitters.

In those embodiments, by emitting infrared rays, visible light interference in the user's vision can be avoided, and the user friendliness can thus be improved.

According to a further aspect of embodiments of the present disclosure, there is provided a computer readable storage medium having a computer program stored, the method according to any one of aspects being implemented when the program is executed by a processor.

According to a further aspect of embodiments of the present disclosure, there is provided an electronic apparatus, comprising: a processor; and a memory storing instructions executable by the processor, the instructions, when executed by the memory, causing the electronic apparatus to implement the method of any one of the aspects.

Through the following description, it would be appreciated that the gesture recognition method for the electronic device according to the present disclosure can improve the recognition reliability with a low cost while avoiding or reducing the misrecognition.

This Summary is provided to introduce the selection of concepts in a simplified manner, which will be further described below in the Description of Embodiments. The Summary is not intended to identify key features or essential features of the present disclosure, nor is it intended to be used to limit the scope of the present disclosure.

### BRIEF DESCRIPTION OF THE DRAWINGS

Fig. 1 is a schematic diagram of an example environment where embodiments of the present disclosure can be implemented;
Figs. 2A, 2B and 2C are schematic diagrams of an operation panel of an electronic device according to some example embodiments of the present disclosure;
Fig. 3 is a schematic diagram of a proximity operation of an electronic device according to some example embodiments of the present disclosure;
Fig. 4 is a schematic diagram of a pulse signal generated by the proximity operation as shown in Fig. 3 according to some example embodiments of the present disclosure;
Fig. 5 is a schematic diagram of an operation panel of an electronic device according to some embodiments of the present disclosure;
Fig. 6 is a flowchart of a gesture recognition method for an electronic device according to some embodiments of the present disclosure;
Fig. 7 is a schematic diagram of an operation panel for operating an electronic device operable through a gesture according to some example embodiments of the present disclosure;
Fig. 8 is a schematic diagram of a pulse signal generated by gesture recognition for an electronic device according to some example embodiments of the present disclosure;
Fig. 9 is a flowchart of a gesture recognition method for an electronic device according to some example embodiments of the present disclosure;
Fig. 10 is a schematic diagram of a pulse signal generated by gesture recognition for an electronic device according to some example embodiments of the present disclosure;
Fig. 11 is a schematic diagram of an electronic device according to some example embodiments of the present disclosure;
Fig. 12 is a schematic diagram of a circuit structure for an electronic device according to some example embodiments of the present disclosure;
Fig. 13 is a schematic block diagram of an electronic apparatus according to some example embodiments of the present disclosure.

Throughout the drawings, the same or similar reference symbols represent the same or corresponding portions.

### DETAILED DESCRIPTION OF EMBODIMENTS

Reference now will be made to various example embodiments as shown in the drawings to describe the principle of the present disclosure. It would be appreciated that the description on those embodiments is provided merely to enable those skilled in the art to better understand and thus implement the present disclosure, rather than suggesting any limitation to the scope of the present disclosure. Similar or same reference symbols are employed throughout the drawings if possible, which refer to the similar or same functions. It would be understood by those skilled in the art that the alterative embodiments about the structure and/or method described below can be adopted, without departing from the principle of the present disclosure.

As used herein, the term "includes" and its variants are to be read as open terms that mean "includes, but is not limited to." The term "or" is to be read as "an/or" unless indicated otherwise. The term "based on" is to be read as "based at least in part on." The terms "an example embodiment" and "an embodiment" are to be read as "at least one embodiment." The term "another embodiment" is to be read as "at least one other embodiment." The terms "first," "second" and the like may refer to different objects or the same object.

As aforementioned, some smart products exhibit poor performance in operation convenience and are probably triggered by mistake. There is a known operation of a smart product, where its shortcut needs to be achieved by pressing a button hidden under the glass on the panel, causing inconvenience in operation. There is another known shortcut for a smart product where the operation of the smart product is controlled by the waving direction. The method has a high false trigger rate and easily leads to a misoperation of the device.

Hence, there arises a need for an improved solution to improve the operation convenience and reliability of the smart product.

The embodiments of the present disclosure provide a gesture recognition method for an electronic device. In the method, the electronic device emits a light signal and receives a light reflection signal formed by reflecting the light signal by a gesture of a user. A feature parameter of the light reflection signal is determined, where the feature parameter may indicate a speed of the gesture of the user, for example, a width of a pulse signal or a number of pulse signals. An operation corresponding to the gesture is identified based on the feature parameter and a corresponding relationship between the feature parameter and a predetermined operation. The method according to embodiments of the present disclosure can improve the recognition accuracy and reliability while avoiding or reducing misrecognition.

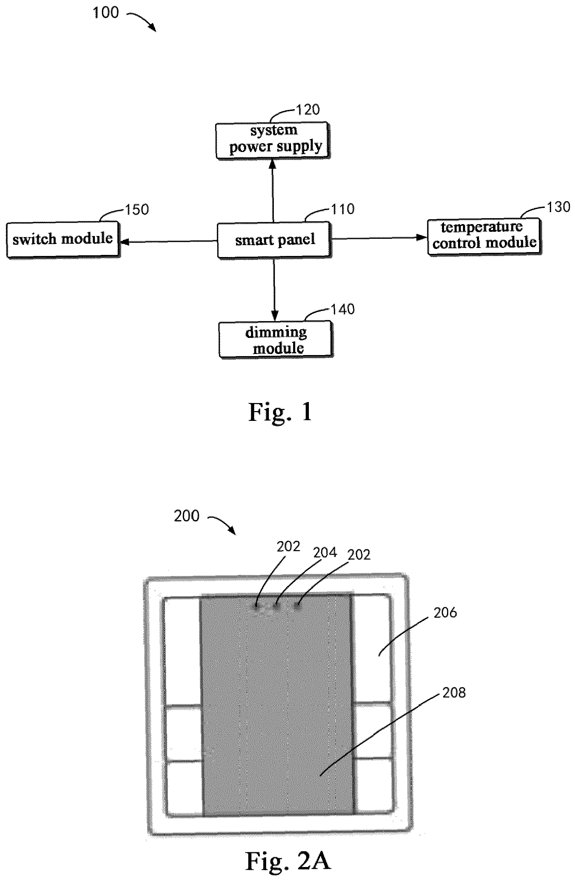

Reference now will be made to the drawings to describe embodiments of the present disclosure. Fig. 1 is a schematic diagram of an example environment 100 where a plurality of embodiments of the present disclosure can be implemented. As shown therein, the example environment 100 includes therein a smart panel 100, a system power supply 120, a switch module 150, a temperature control module 130, and a dimming module 140. The smart panel 110 may communicate with respective devices connected thereto via a bus. Specifically, operations of the respective devices connected thereto can be controlled. As mentioned above, the smart panel 110 may communicate with respective devices via the bus according to the KNX protocol. The embodiments of the present disclosure are not limited to this, and other manners may be used to communicate with respective devices. For example, the communication may be performed in a wireless manner, for example, WIFI, Bluetooth or the like. The smart panel 110 may correspond to the electronic device according to the present disclosure.

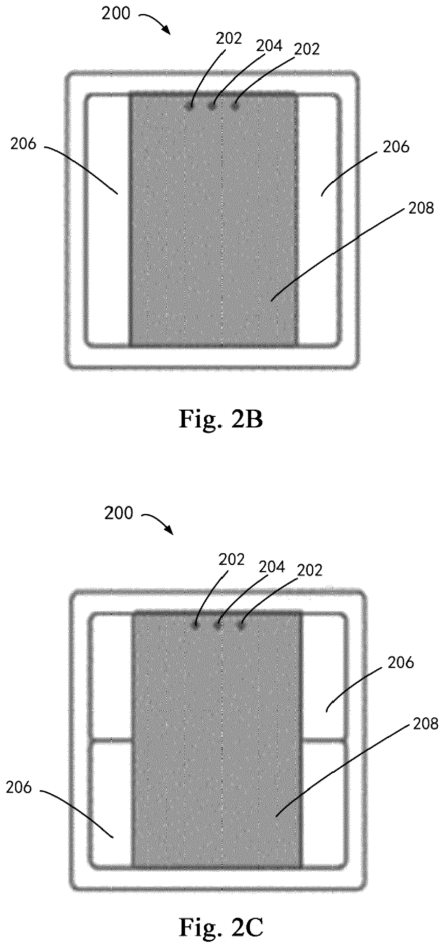

Hereinafter, reference will be made to Figs. 2 to 13 to describe in detail the technical solution according to the example embodiments of the present disclosure.

Reference will first be made to Figs. 2A-2C. Figs. 2A-2C are schematic diagrams illustrating an operation panel of an electronic device according to some example embodiments of the present disclosure. As shown in Fig. 2A, the operation panel 200 includes thereon a screen 208, a button 206, and a light emitter 202 and a light receiver 204. A predetermined operation may be performed by pressing the button 206. In some embodiments, the screen 208 may be a LCD display.

In the embodiment as shown in Fig. 2, two light emitters 202 are arranged on the operation panel 200 of the electronic device, and light emitting locations on the operation panel 200 of the electronic device are spaced apart a predetermined distance. The two light emitters 202 can emit a light signal, respectively. The light receiver 204 can receive a light reflection signal, such as a light reflection signal formed by reflecting, by a gesture of a user, the light signal. The light reflection signal may be processed by a processor to determine a feature parameter of the light reflection signal, where the feature parameter may represent a speed of the gesture of the user. Based on the feature parameter and a corresponding relationship between the pre-stored feature parameter and a predetermined operation, the operation corresponding to the gesture can be identified. In the above-mentioned embodiment, with the arrangement of two light reflectors, it can be achieved to detect two pulse signals during a gesture. Based on the feature parameter of the pulse signal, the operation corresponding to the gesture can be recognized accurately, and the recognition accuracy can be improved accordingly. In some embodiments, a time interval between two pulse signals can be determined; an average speed of the gesture can be determined based on a predetermined distance and the time interval; and the operation corresponding to the gesture can be determined based on the average speed and the corresponding relationship. In the above-mentioned embodiment, based on the light emitting locations of the two light emitters and the time interval between two pulse signals, the speed of the gesture can be determined accurately, to thus accurately identify the operation corresponding to the gesture and improve the identification accuracy.

In the embodiment as shown in Fig. 2, two light reflectors 202 are arranged. The embodiments of the present disclosure are not limited this, and other numbers of light sensors may be provided, for example, one, three or more. As compared with the embodiment where one light emitter 202 is arranged, the embodiment with two light emitters 202 has a higher recognition reliability, which will be described below in detail. In addition, considering factors such as a cost, spatial layout and the like, an appropriate number of light emitters 202 is provided.

Figs. 2B and 2C differ from Fig. 2A mainly in number of buttons 206. As shown in Fig. 2B, there are provided two buttons 206. In the embodiment as shown in Fig. 2C, there are provided four buttons. In the embodiment as shown in FIG. 2A, there are provided six buttons. The embodiments of the present disclosure are not limited to them, and any number of buttons may be arranged as required.

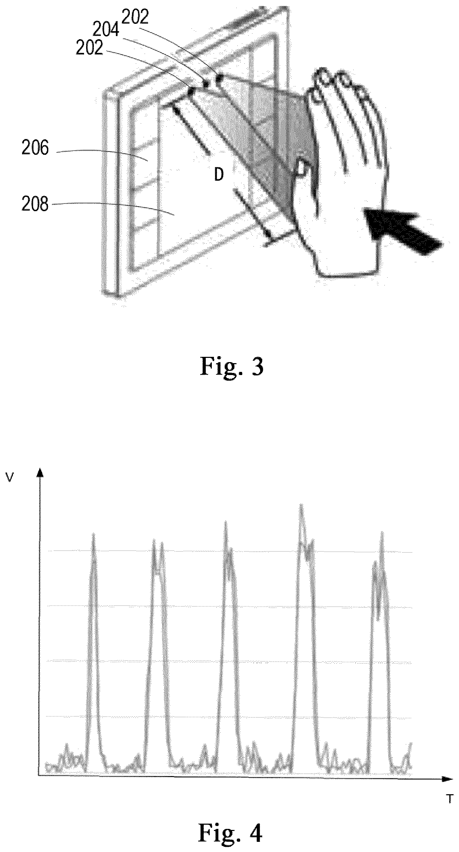

Hereinafter, reference will be made to Figs. 3 and 4 to describe a proximity operation of an electronic device according to embodiments of the present disclosure. Fig. 3 is a schematic diagram of a proximity operation of an electronic device according to some example embodiments of the present disclosure. Fig. 4 is a schematic diagram of a pulse signal generated by the proximity operation as shown in Fig. 3 according to some example embodiments of the present disclosure.

As shown in Fig. 3, a user's hand is placed in front of the operation panel 200 to block the light emitted by the light reflector 202 and reflect the light to the light receiver 204. Such operation is referred to as "proximity." In some embodiments, the light emitter 202 emits a pulsed light signal. Since the user's hand lingers in front of the operation panel 200 for a long time, the light emitted by the emitter 202 during the time is all reflected by the gesture of the user to the light receiver 204, and the pulse thus formed is shown in Fig. 4. The processor in the electronic device receives the light signal based on the light receiver 204, and, for example, determines that a user is performing the proximity operation based on the number of pulses fed back. Therefore, the electronic device can be controlled to perform the corresponding operation.

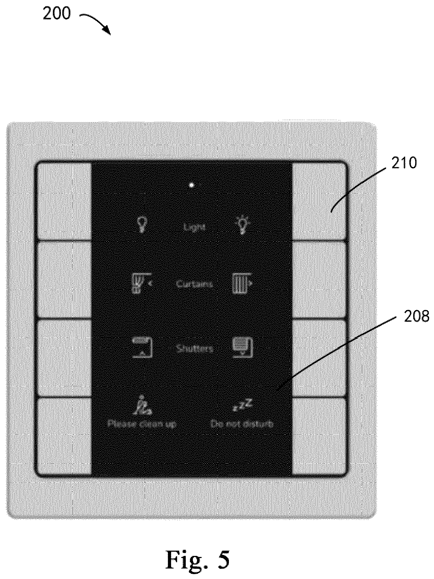

Fig. 5 is a schematic diagram of an operation interface of an operation panel of an electronic device according to a further example embodiment of the present disclosure. The operation panel 200 shown in Fig. 5 differs from the counterpart shown in Figs. 2A-2C mainly in that dynamic icons are provided on the screen. For example, the screen displays "light" and icons of bulbs respectively in a glowing and a non-glowing state on two sides. "Curtains" and icons of curtains respectively in a folded and an unfolded state on two sides. "Shutters" and icons of shutters respectively in an open and a closed state on two sides. "Please clean up," "Do not disturb" and corresponding icons are displayed. For example, when a user is making a particular gesture, the electronic device identifies that the operation corresponding to gesture is turning on the light, and the bulb on the right side keeps blinking to display that the operation of turning on the light is being performed. Likewise, other icons may indicate that similar dynamic operations are being performed. As such, the user can fully learn what operation the electronic device is to perform.

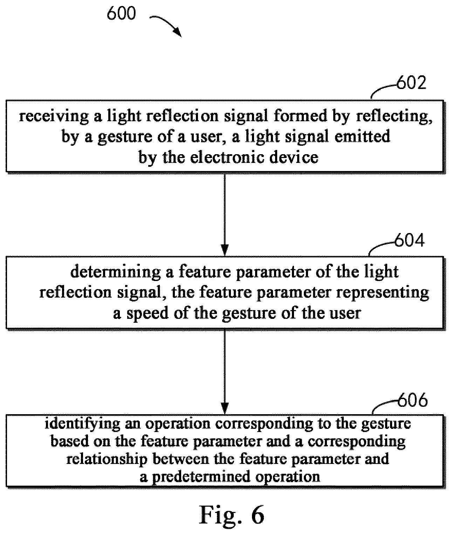

Hereinafter, reference will be made to Figs. 6-10 to further describe the gesture recognition method for an electronic device according to the present disclosure.

Fig. 6 is a flowchart 600 of a gesture recognition method for an electronic device according to some example embodiments of the present disclosure. In some embodiments, the gesture recognition method for an electronic device may include: receiving a light reflection signal, where the light reflection signal is formed by reflecting, by a gesture of a user, a light signal emitted by the electronic device. Determining the feature parameter of the light reflection signal, the feature parameter may represent a speed of the gesture of the user. For example, the feature parameter may be a pulse width of a pulse signal, a number of pulse signals received within a predetermined time, a time interval between pulse signals received within a predetermined time, or the like. Subsequent to determining the parameter, an operation corresponding to the gesture may be identified based on the feature parameter and a corresponding relationship between the feature parameter and a predetermined operation. In this way, by identifying the feature parameter representing the gesture speed to identify the operation corresponding to the gesture, the recognition accuracy can be improved while misrecognition can be avoided or reduced.

In some embodiments, the light reflection signal is a pulse signal. The pulse signal is formed by reflecting, by the gesture of the user, a pulsed or continuous light signal. In this way, a pulsed feedback signal is formed to facilitate recognition and improve the recognition reliability.

In some embodiments, determining the feature parameter of the light reflection signal may include: determining a pulse width of a pulse signal; determining a number of pulse signals received within a predetermined time; and/or determining a time interval between pulse signals received within a predetermined time. In this way, a speed of the gesture can be determined by determining the pulse width, the number of pulse signals, and the pulse time interval, so that the operation corresponding to the gesture can be easily identified. Description will be provided below in detail.

In some embodiments, identifying the operation corresponding to the gesture based on the feature parameter and the corresponding relationship between the feature parameter and the predetermined operation includes: comparing the number of pulse signals received within the predetermined time with a predetermined number threshold, and determining that the gesture is used to perform a first type of operation for the electronic device when the number of pulse signals is less than the predetermined number threshold. The first type of operation may be a proximity operation. When the number of pulse signals received within the predetermined time is greater than or equal to the predetermined number threshold, it is determined that the gesture is used to perform a second type of operation for the electronic device. The second type of operation may be a slap operation. The operation corresponding to the gesture is determined based on the number of pulse signals and the corresponding relationship. In this way, the operation type corresponding to the gesture may be first determined by means of the number of pulse signals received within the predetermined time. On the basis of determining the operation type, the specific operation corresponding to the gesture can be further determined.

In some embodiments, identifying the operation corresponding to the gesture based on the feature parameter and the corresponding relationship between the feature parameter and the predetermined operation includes: comparing the pulse width of the pulse signal with a pulse width threshold, and determining that the gesture is used to perform a first type of operation for the electronic device when the pulse width of the pulse width is greater than the pulse width threshold. For example, the first type of operation may be a proximity operation. When the pulse width of the pulse signal is less than or equal to the pulse width threshold, it is determined that the gesture is used to perform a second type of operation for the electronic device. The second type of operation may be a slap operation. The operation corresponding to the gesture is determined based on the pulse width of the pulse signal and the corresponding relationship. In this way, by means of the pulse width, the specific operation corresponding to the gesture can be identified quickly.

In some embodiments, identifying the operation corresponding to the gesture based on the feature parameter and the corresponding relationship between the feature parameter and the predetermined operation includes: determining whether a time interval between at least one pair of adjacent pulse signals in the pulse signals received within a predetermined time is greater than a predetermined time threshold, and determining that the gesture is used to perform a first type of operation for the electronic device when the time interval is greater than the predetermined time threshold. For example, the first type of operation may be a proximity operation. If the time intervals between adjacent pulse signals in the pulse signals received with the predetermined time are all less than the predetermined time threshold, it is determined that the gesture is used to perform a second type of operation for the electronic device. For example, the second type of operation may be a slap operation. Then, the operation corresponding to the gesture can be determined based on an average time interval and a predetermined corresponding relation. In this way, the specific operation corresponding to the gesture can be identified quickly and reliably.

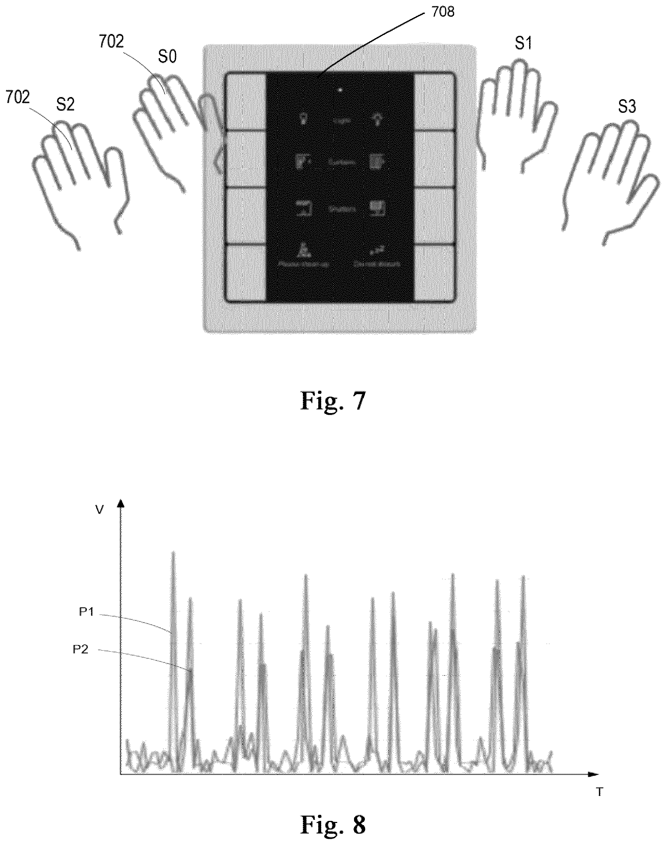

Hereinafter, reference will be made to Fig. 7 to further describe the gesture recognition method for an electronic device according to embodiments of the present disclosure. Fig. 7 is a schematic diagram of an operation panel of an electronic device operable by a gesture according to some embodiments of the present disclosure. A slap operation refers to operating the operation panel by waving a hand in front of the operation panel. It differs from the proximity operation in that: the hand is in a still state or slowly moving state during the proximity operation; by contrast, during the slap operation, the hand is quickly moving in front of the screen, for example, moving from the left side to the right side of the operation panel, or from the top to the bottom of the operation panel, or vice versa.

Various slap operations may be designed as required. For instance, scene control is performed, for example: turning on or off all household appliances; dimming or lighting up, for example, outputting a 50% dimming range; outputting a temperature control value; outputting a wind speed control value; and the like.

In some embodiments of the present disclosure, different slap operations are differentiated by the speed of the gesture. For example, the slap operation corresponds to an operation of turning on the light if the speed of the gesture is within a first speed range; the slap operation corresponds to an operation of turning off the light if the speed of the gesture is within a second speed range, and the like.

As shown in Fig. 7, a user's hand 702 moves from a location S0 to a location S1 on the right side. The user's hand may continue to move quickly from a location S3 on the right side to S2 on the left side. If the speed of the user's gesture meets a predetermined condition, the two waving actions may correspond to an operation. The embodiments of the present disclosure are not limited to this, where the number of waving actions is not limited in any fashion. A series of operations completed within a predetermined time may be considered as a gesture, corresponding to a predetermined action. For the pulse generated by a gesture of a user, see Fig. 8.

Fig. 8 is a schematic diagram of a pulse signal generated by gesture recognition for an electronic device according to some example embodiments of the present disclosure. The pulse P1 shown therein corresponds to light reflected before a user's hand reaches the first light emitter 202 (shown in Fig. 2A), and the pulse P2 corresponds to light reflected before the user's hand reaches the second light emitter 202 (shown in Fig. 2A). The subsequent sets of pulses correspond to pulses corresponding to a second, a third, a fourth and a fifth waving action. The waveform of the pulse shown in Fig. 8 is provided merely as an example, and the solution of the present application is not limited to this, where light emission signals differing in pulse width or frequency may be employed as actually required, and pulses of the light emission signals generated by the waving actions will be changed accordingly. The processor may identify the operation corresponding to the gesture based on the feature parameter of the reflected light signal, such as a pulse width, a number of pulses, a time interval between pulses, and the like, and based further on the corresponding relationship between the feature parameters and the predetermined operation.

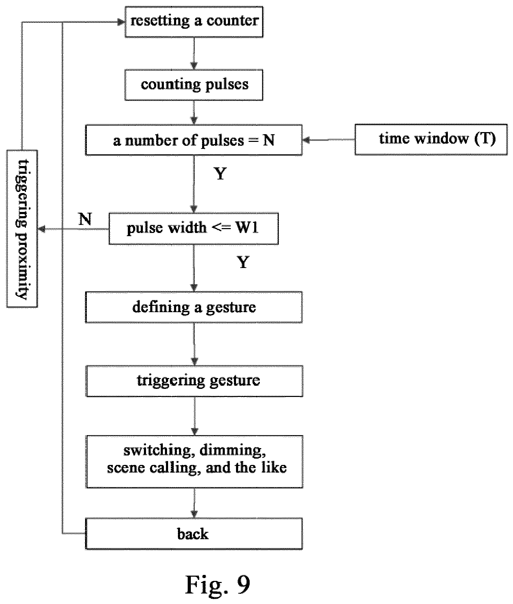

Hereinafter, reference will be made to Fig. 9 to describe a flowchart 900 of a gesture recognition method for an electronic device according to embodiments of the present disclosure.

As shown therein, a counter is first reset, and pulse counting is then started. A time window T may be preset to, for example, 1 second, 0.5 seconds, and the like. Pulses received within the time window T is identified as corresponding to a gesture. When determining that a number of pulses within the time window is equal to N (or greater than N), whether the pulse width is less than a predetermined pulse width threshold W1 is further determined. When the pulse width is greater than the pulse width threshold W1, the gesture is identified as a proximity operation. When the pulse width is less than or equal to the pulse width threshold W1, it is determined that a user-specific gesture is received. Then, gesture triggering is executed to perform a corresponding operation, such as switch switching, dimming, scene calling, and the like.

In the embodiment as shown in Fig. 9, a number of pulses is first determined, and a pulse width is then determined. Subsequently, a specific operation corresponding to the gesture is determined. The embodiments of the present disclosure are not limited to this, where a corresponding operation may be determined only based on a pulse width or a number of pulses. For example, as long as a number of pulses received within a predetermined time reaches a preset threshold, it is indicated that the gesture movement is sufficiently rapid, and it is therefore not necessary to further determine the pulse width. In turn, when it is determined that the pulse width is less than or equal to the pulse width threshold, further determining the number of pulses may be omitted. Determining both the number of pulses and the pulse width has the following advantage of: preventing false trigger while improving the gesture recognition reliability.

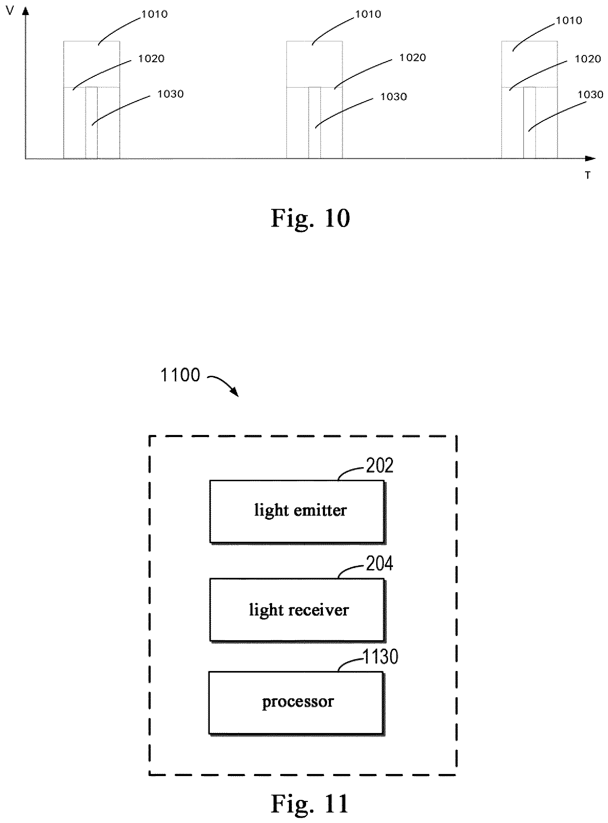

Fig. 10 is a schematic diagram of a pulse signal generated by gesture recognition for an electronic device according to some example embodiments of the present disclosure. As shown therein, a pulse signal 1010 corresponds to a light pulse signal emitted by the light emitter. A pulse signal 1020 corresponds to a pulse reflected during a proximity operation, namely when a hand stays still or moves slowly in front of the screen. The pulse width thereof has the same pulse width as the pulse signal 1010. This indicates that the user's hand reflects substantially all the light pulse signals emitted from the light emitters to the light receiver, and only the light signals are weakened in intensity. Further, a pulse signal 1030 corresponds to a signal reflected to the light receiver by a user's waving action in front of the screen during a slap operation. Since the user's waving action is performed quickly and the time for reflecting the light signal is short, the width of the reflected pulse signal is narrower than the width of the emitted pulse signal. When the waving action is quicker, the pulse signal 1030 has a narrower width, or vice versa.

Fig. 11 is a schematic diagram of an electronic device 1100 according to some example embodiments of the present disclosure. As shown therein, the electronic device includes a light emitter 202, a light receiver 204 and a processor 1130. The light emitter 202 reflects a light signal. The light receiver 204 receives the light reflection signal. The light reflection signal is formed by reflecting, by a gesture of a user, the light signal. The processor may determine a feature parameter of the light reflection signal, where the feature parameter represents a speed of the gesture of the user. Based on the feature parameter and a corresponding relationship between the feature parameter and a predetermined operation, an operation corresponding to the gesture is identified. In this way, the light emitter 202 emits a signal, and the light receiver 204 receives a light signal and identifies a feature parameter representing a speed of the gesture to identify an operation corresponding to the gesture; therefore, the recognition accuracy can be improved while misrecognition can be avoided or reduced.

In some implementations, the light emitter 202 includes a first light emitter and a second light emitter. The first light emitter emits a first light signal, and the second light emitter emits a second light signal. The light emitting locations of the first light emitter and the second light emitter on the operation panel of the electronic device are spaced apart a predetermined distance. In some implementations, the first and second light emitters are infrared emitters. In this way, by emitting infrared rays, visible light interference in the user's vision can be avoided, and the user's friendliness can be improved accordingly.

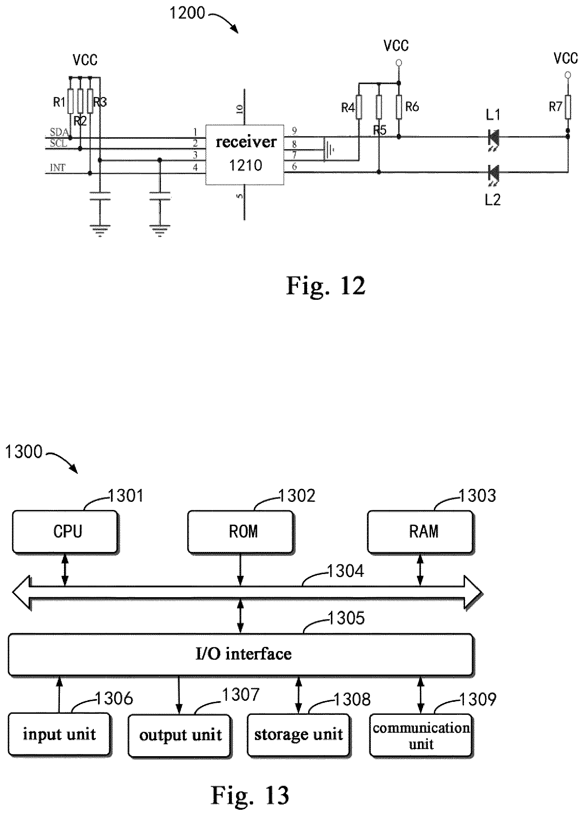

Fig. 12 is a schematic diagram of a circuit structure 1200 of an electronic device according to some example embodiments of the present disclosure. As shown therein, the circuit includes therein light emitting diodes L1, L2, a receiver 120, and resistors R1-R7 for supplying power to the receiver 1210 and the light emitting diodes L1, L2 (i.e., providing an appropriate voltage). The light emitting didoes L1, L2 emit light, and the receiver 1210 receives light from the light emitting diodes L1, L2 reflected by a gesture of a user and outputs a corresponding signal to the controller (not shown). As shown in Fig. 12, the receiver 1210 may also receive some control signals SDA, SCL, INT and the like. In the regard, details will not be described.

Fig. 13 is a schematic block diagram of an electronic apparatus according to some example embodiments of the present disclosure. The electronic apparatus is intended to represent a digital computer in various forms, for example, a laptop, a desktop, a workstation, a personal digital assistant, a server, a blade server, a large-scale computer, or other appropriate computer. The electronic apparatus may also represent a mobile device in various forms, such as a personal digital processor, a cellular phone, a smart phone, a wearable device or other similar computing device. The components, connections and relations thereof, and functions thereof are provided merely as an example, without suggesting any limitation to implementations of the present disclosure described or required here.

As shown therein, the apparatus 1300 includes a central processing unit 1301 which performs various appropriate acts and processing, based on computer program instructions stored in a read-only memory (ROM) 1302 or computer program instructions loaded from a storage unit 1308 to a random access memory (RAM) 1303. The RAM 1303 stores therein various programs and data required for operations of the apparatus 1300. The computing unit 1301, the ROM 1302 and the RAM 1303 are connected via a bus 1304 with one another. An input/output (I/O) interface 1306 is also connected to the bus 1304.

The following components in the apparatus 1300 are connected to the I/O interface 1306: an input unit 1306 such as a keyboard, a mouse and the like; an output unit 1307 including various kinds of displays and a loudspeaker, etc.; a storage unit 1308 including a magnetic disk, an optical disk, and etc.; a communication unit 1309 including a network card, a modem, and a wireless communication transceiver, etc. The communication unit 1309 allows the apparatus 1300 to exchange information/data with other devices through a computer network such as the Internet and/or various kinds of telecommunications networks.

The computing unit 1301 may be various general and/or special-purpose processing components having a processing and computing capability. Some examples of the computing unit 1301 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, and the like. The computing unit 1301 executes various processes and processing described above, e.g., the process 200, 300. For example, in some embodiments, the process 200, 300 can be implemented as a computer software program that is tangibly included in a machine readable medium, e.g., the storage unit 1308. In some embodiments, part or all of the computer programs may be loaded and/or mounted onto the apparatus 1300 via ROM 1302 and/or communication unit 1309. When the computer program is loaded to the RAM 1303 and executed by the computing unit 1301, one or more steps of the process 200, 300 as described above may be executed. Alternatively, in other embodiments, the computing unit 1301 can be configured in any other appropriate manner (e.g., by means of firmware) to perform the process 200, 300.

According to embodiments of the present disclosure, there is further provided a computer readable storage medium having a computer program stored thereon, where the above-mentioned method according to embodiments of the present disclosure is implemented when the program is executed by a processor.

In addition, according to embodiments of the present disclosure, there is also provided an electronic apparatus, comprising: a processer; a memory having instructions executable by the processor, the instructions, when executed by the processor, causing the electronic apparatus to implement the method described above.

In some embodiments of the present disclosure, as compared with the known technologies, determining a specific operation corresponding to a gesture based a gesture speed has the following technical advantage of improving the gesture recognition reliability with a low cost while avoiding or reducing misrecognition.

Various embodiments of the present disclosure have been described exemplarily, which are only optional embodiments, not to be exhaustive or suggest any limitation to the present disclosure. Although the claims of the present disclosure are formulated for a specific combination of features, it would be appreciated that the scope of the present disclosure further covers any novel feature or any novel combination of features disclosed explicitly or implicitly here or generalized therefrom, irrespective of whether it relates to the same solution of any one of the current claims. The applicant hereby makes it clear that new claims may be formulated for those features and/or a combination of those features during the prosecution of the present application or in any application further derived therefrom.

The terminology used herein was chosen to best explain the principles of the embodiments, the practical application or technical improvement over technologies found in the marketplace, or to enable others of ordinary skill in the art to understand the embodiments disclosed herein. To those skilled in the art, the present disclosure allows various modifications and alternations. Within the spirit and principle of the present disclosure, any modification, equivalent substitution, improvement or the like should be covered within the protection scope of the present disclosure.

## Claims

1. A gesture recognition method for an electronic device, comprising:
receiving a light reflection signal formed by reflecting, by a gesture of a user, a light signal emitted by the electronic device;
determining a feature parameter of the light reflection signal, the feature parameter representing a speed of the gesture of the user; and
identifying an operation corresponding to the gesture based on the feature parameter and a corresponding relationship between the feature parameter and a predetermined operation.

2. The method of claim 1, wherein the light reflection signal is a pulse signal formed by reflecting, by the gesture of the user, the light signal in a pulsed or continuous form.

3. The method of claim 2, wherein determining the feature parameter of the light reflection signal comprises:
determining a pulse width of the pulse signal;
determining a number of the pulse signals received within a predetermined time; and/or
determining a time interval between the pulse signals received within a predetermined time.

4. The method of claim 3, wherein identifying the operation corresponding to the gesture based on the feature parameter and the corresponding relationship between the feature parameter and the predetermined operation comprises:
responsive to the number of the pulse signals received within the predetermined time being less than a predetermined number threshold, determining that the gesture is used to execute a first type of operation for the electronic device; or
responsive to the number of the pulse signals received within the predetermined time being greater than or equal to the predetermined number threshold, determining that the gesture is used to execute a second type of operation for the electronic device, and determining the operation corresponding to the gesture based on the number of the pulse signals and the corresponding relationship;
wherein the first type of operation is different than the second type of operation.

5. The method of claim 3, wherein identifying the operation corresponding to the gesture based on the feature parameter and the corresponding relationship between the feature parameter and the predetermined operation comprises:
responsive to the pulse width of the pulse signal being greater than a pulse width threshold, determining that the gesture is used to execute a first type of operation for the electronic device; or
responsive to the pulse width of the pulse signal being less than or equal to the pulse width threshold, determining that the gesture is used to execute a second type of operation for the electronic device, and determining the operation corresponding to the gesture based on the pulse width of the pulse signal and the corresponding relationship;
wherein the first type of operation is different than the second type of operation.

6. The method of claim 3, wherein identifying the operation corresponding to the gesture based on the feature parameter and the corresponding relationship between the feature parameter and the predetermined operation comprises:
responsive to a time interval between at least one pair of the pulse signals adjacent in the pulse signals received within the predetermined time being greater than a predetermined time threshold, determining that the gesture is used to execute a first type of operation for the electronic device; or
responsive to a time interval between the pulse signals adjacent in the pulse signals received within the predetermined time being less than or equal to the predetermined time threshold, determining that the gesture is used to execute a second type of operation for the electronic device, and determining the operation corresponding to the gesture based on an average time interval and the corresponding relationship;
wherein the first type of operation is different than the second type of operation.

7. The method of claim 1, wherein receiving the light reflection signal comprises:
receiving a first light reflection signal, wherein the first light reflection signal is formed by reflecting, by the gesture of the user, a first light signal emitted by a first light emitter of the electronic device; and
receiving a second light reflection signal, wherein the second light reflection signal is formed by reflecting, by the gesture of the user, a second light signal emitted by a second light emitter of the electronic device, and light emitting locations of the first light emitter and the second light emitter on an operation panel of the electronic device are spaced apart a predetermined distance.

8. The method of claim 7, wherein identifying the operation corresponding to the gesture based on the feature parameter and the corresponding relationship between the feature parameter and the predetermined operation comprises:
determining a time interval between a moment of receiving the first light reflection signal and a moment of receiving the second light reflection signal;
determining an average speed of the gesture based on the predetermined distance and the time interval; and
determining the operation corresponding to the gesture based on the average speed and the corresponding relationship.

9. An electronic device, comprising:
a light emitter configured to emit a light signal;
a light receiver configured to receive a light reflection signal, the light reflection signal formed by reflecting, by a gesture of a user, the light signal; and
a processor configured to determine a feature parameter of the light reflection signal, the feature parameter representing a speed of the gesture of the user, and to identify an operation corresponding to the gesture based on the feature parameter and a corresponding relationship between the feature parameter and a predetermined operation.

10. The electronic device of claim 9, wherein the light emitter comprises:
a first light emitter configured to emit a first light signal; and
a second light emitter configured to emit a second light signal;
wherein light emitting locations of the first light emitter and the second light emitter on an operation panel of the electronic device are spaced apart a predetermined distance.

11. The electronic device of claim 10, wherein the first light emitter and the second light emitter are infrared emitters.

12. A computer readable storage medium having a computer program stored, the method of any one of claims 1-8 being implemented when the program is executed by a processor.

13. An electronic apparatus, comprising:
a processor; and
a memory storing instructions executable by the processor, the instructions, when executed by the memory, causing the electronic apparatus to implement the method of any one of claims 1-8.
